# EUROPEAN PATENT SPECIFICATION

(11) **EP 0 494 844 B1**
(45) Date of publication and mention of the grant of the patent: **19.04.1995**
(21) Application number: 92830001.1
(22) Date of filing: 02.01.1992
(51) Int. Cl.: C07F 9/38, A61K 31/66

(54) **Process for the preparation of diphosphonic acids and salts thereof**
Verfahren zur Herstellung von Diphosphonsäuren und Salzen davon
Procédé de préparation d'acides diphosphoniques et de leurs sels

(30) Priority: 08.01.1991 IT FI910003
(43) Date of publication of application: 15.07.1992
(73) Proprietor: ISTITUTO GENTILI S.p.A., 56125 Pisa (IT)
(72) Inventor: Guainai-Ricci, Giuseppe, I-56021 Titignano-Cascina (Pisa) (IT); Rosini, Sergio, I-57100 Livorno (IT)
(74) Representative: Bardini, Marco Luigi

(56) References cited:
- EP-A- 0 039 033
- GB-A- 2 166 741

## Description

The present invention relates to a process for the preparation of diphosphonic acids and salts thereof.

More particularly, the present invention relates to a process for the preparation of amino-alkylidene diphosphonic acids of the formula 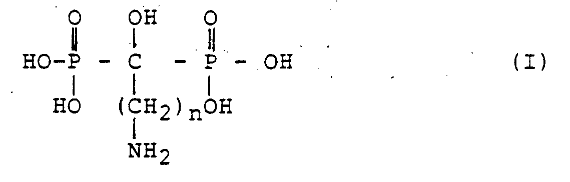
wherein n is comprised between 2 and 8, and in particular 4-amino-1-hydroxybutylidene-1,1-diphosphonic acid (ABDP) and 6-amino-1-hydroxyhexylidene-1,1-diphosphonic acid (AHDP) and their salts. The above diphosphonic acid derivatives exhibit, as is known, a chelating and sequestering power for polyvalent metal ions and, by virtue of this ability, they are used in the pharmaceutical field, water treatment and detergent industry. As far as the pharmaceutical field is concerned, diphosphonic acid derivatives according to the formula (I) have been proven to be active constituents very effective for the treatment of disturbances related to osseous dismetabolism, such as osteoporosis.

The known processes for the preparation of diphosphonic acids and, in particular, of amino-hydroxyalkylidene diphosphonic acids according to the formula (I) provide for reacting the corresponding amino-carboxylic acid with a mixture of phosphonic acid and phosphorus halide, such as phosphorus trichloride and subsequently hydrolyzing the polymeric products obtained in order to liberate the diphosphonic acid to be recovered in a pure form, for example, by way of crystallyzation. According to US patent No.4407761, the reaction is conducted in the presence of an inert substance, for example a chlorinated hydrocarbon such as chlorobenzene and with molar ratios (amino-carboxylic acid)/(H₃PO₃)/(PCl₃) in the range of 1:1:1 to 1:2:2. The hydrolysis is conducted with a strong acid which does not oxidize the aminophosphonic acid and the yield of the process is comprised between 45 and 55%.

According to US Patent no.4705651, the reaction is conducted in the absence of either solvents or inert substances and with molar ratios (amino-carboxylic acid) (H₃PO₃)/(PCl₃) equal to 1:1,25:2 approximately. As hydrolyzing agent water is used and the aminodiphosphonic acid sought is recovered by precipitation in alcohol added to the hydrolyzed solution. In this second case the yield of the process is comprised between 60 and 75%.

Although the process according to US patent no.4705651 has the advantage, with respect to US patent no.4407761, of a higher yield and of not involving the use of solvents or inert substances during the reaction step, however it has been proven unsuitable to an industrial scale application and, moreover, the yield of the process is not wholly satisfactory. As a matter of fact, according to the method described in the above cited patent, an extremely viscous reaction mixture is obtained which cannot be stirred. In this condition the subsequent addition of water or diluted acid may result in a danger due to the presence of PCl₃ "pockets" embodied in the reaction bulk which, coming into contact with the hydrolyzing agent, may be cause of sudden, localized overheating and possibility of explosion of the released gases. Those undesired reactions can be kept under a relative control when operating on a small scale, but involve insoluble problems, when the process is carried out at an industrial level.

The object of the present invention is to provide a process for the preparation of diphosphonic acids having the formula (I) suitable for the industrial production of these compounds and with higher yields with respect to those of the prior art processes.

The above object is reached, according to the present invention, by reacting an amino-carboxylic acid with phosphorous acid and phosphorus halide in large excess with respect to the stoichiometric ratio and in the absence of either solvents or inert substances not related to the reaction. In particular, the molar ratio (amino-carboxylic acid)/ (H₃PO₃)/(PX₃) is comprised between 1:3:2 and 1:20:6 and preferably is comprised between 1:5:2 and 1:10:4.
Considerable improvements are obtained using the above ratios both as regards the working of the process on a large scale, in as much as the reaction bulk is more fluid, and as regards the yield of diphosphonic acid obtained, which varies from 75% to 85%.

If the need occurs to increase the fluidity of the reaction mixture, at the end of the reaction step additional phosphorous acid can be added; this operation is generally not necessary when operating with the method of the invention, but can be helpful when the apparatus under use does not allow for an easy discharge of the product.

Thanks to the fluidity of the reaction mixture, it is possible to distill the excess phosphorus halide at the end of the reaction with a view to both recovering it for re-use and preventing heating and halide acid excessive release when the hydrolyzing agent (water or non-oxidizing acid) necessary for the hydrolysis of the reaction products is added. The hydrolysis is then conducted according to known methods.

The amino-diphosphonic acid thus obtained can be isolated by means of a slow crystallization from the hydrolysis solution or by addition of a water soluble solvent in which the product is insoluble. To this end, C1-C3 alcohols or acetone, inter alia can be used.

In the practice of the process according to the invention the amino-carboxylic acid and the phosphorous acid are molten together under nitrogen at 85°C approximately and to the molten mixture PCl₃ is slowly added controlling that the temperature be maintained between 85°C and 95°C.

The preferred ratios amongs the reactants (acid/H₃PO₃/PCl₃) are comprised between 1:5:2 and 1:10:4. After the PCl₃ addition the reaction mixture is kept at about 90°C for a period of time which generally varies from 1 hour to 5 hours and finally the mixture is carefully poured in water under agitation.

The inverse process, i.e. the addition of water to the reaction mixture kept under agitation is an equally valid, alternative method.

The solution thus obtained is kept under reflux generally for six hours and then decolorized by means of charcoal and filtered. If the diphosphonic derivative to be obtained is the acid form, the latter is crystallized from the clear solution or alternately an approximately equal volume of methyl alcohol is added under stirring for about 24 hours and finally the product obtained is filtered and dried. If on the other side a salt of the diphosphonic acid is desired, the corresponding base is added to the aqueous solution.

The amino-carboxylic acids that can be used with the process according to the invention are in particular the 4-amino-butyric acid, the 5-amino-valeric acid and the 6-amino-caproic acid, when the corresponding aminodiphosphonic acids comprising an alkylidene chain with four, five and six C atoms respectively are to be obtained. The process according to the invention is especially convenient if the lithium, sodium or potassium salt of the aminodiphosphonic acid has to be prepared both in the mono- and bi-substituted form.
In this case it is not necessary to preliminarily isolate the acid, but is is sufficient to add the corresponding alkaline hydroxyde to neutralize the acid solution; the operation must be conducted at a temperature of 80°C preferably using diluted solutions both of the diphosphonic acid and of the alkaline hydroxide and measuring the pH of diluted samples during the operation. This expedient is necessary to avoid that the product starts precipitating during the neutralization step so that it can crystallize subsequently; in this way the produced salt has a very high purity and does not need generally further treatments.

The operating parameters of the above operation are obviously variable according to the type of diphosphonic acid which has been neutralized, the type of base used for the neutralization and the type of desired salt (mono-or bi-basic) and are defined case by case by optimizing the operation.

The following examples are illustrative of the practice of the invention without being limitative in any manner.

### EXAMPLE 1

206.3 g (1.5 moles) of phosphorus trichloride were added dropwise to a molten mixture obtained by heating to 85°C 65.5 g (0.5 moles) of 6-aminohexanoic acid and 492.0 g (6.0 moles) of phosphorous acid under stirring and N₂ atmosphere in such a way to maintain a moderate reflux. After the addition, stirring of the mixture was carried on keeping it at 85-95°C for two hours and then 400 ml of demineralized water were cautiously added. The solution was kept to the boiling point for about six hours, was then decolorized by means of charcoal and finally crystallized at room temperature. The crystalline product was filtered and air dried, the analysis confirmed the identity of the product thus obtained, i.e. 6-amino-1-hydroxy-hexylidene-1,1-diphosphonic acid, and the absence of impurities.
108.1 g of product were obtained corresponding to 0.39 moles and to a molar yield of 78%.

### EXAMPLE 2

343.8 g (2.5 moles) of phosphorus trichloride were added dropwise to a molten mixture obtained by heating to 90°C 65.5 g (0.5 moles) of 6-amino-hexanoic acid and 246.0 g (3.0 moles) of phosphorous acid under stirring and N₂ atmosphere in such a way to maintain a moderate reflux. After ending the dropwise addition, a temperature was maintained such as to have a low reflux for two hours and then a part of the excess phosphorus trichloride was distilled. A 20% solution of HCl (500 ml) was then cautiously added and the resulting solution was brought to reflux condition for six hours; decolorizing charcoal was added; the solution was cooled to room temperature and an equal volume of methanol was finally added under stirring. The precipitate thus obtained was filtered and washed with demineralized water and air dried.

The analysis confirmed the identity of the product, i.e. 6-amino-1-hydroxyhexylidene-1,1-diphosphonic acid, and its high purity. 116.4 g of product were obtained corresponding to 0.42 moles and to a molar yield equal to 83%.

### EXAMPLE 3

412.5 g (3 moles) of phosphorus trichloride were added dropwise to a molten mixture obtained by heating to 90°C 117.2 g (1 mole) of 5-amino valeric acid and 656.0 g (8 moles) of phosphorous acid under stirring and N₂ atmosphere in such a way as to maintain a moderate reflux.
After ending the dropwise addition stirring was carried on at 85 - 95°C for two hours and then the mixture was cautiously added to 1500 g of water/ice. The solution thus obtained was brought to reflux condition for about six hours, decolorizing charcoal was added, the solution was cooled to room temperature and finally an equal volume of methanol was added under stirring. After 24 hours approximately the precipitate obtained was filtered and air dried.
The analysis confirmed the identity of the product, i.e. 5-amino-1-hydroxypentylidene-1,1-diphosphonic acid, and the high purity thereof. 200 g of the product have been obtained corresponding to 0.76 moles and to a yield of 76%.

### EXAMPLE 4

247.5 g (1.8 moles) of phosphorus trichloride were added dropwise to a molten mixture obtained by heating at 90°C 61.8 g (0.6 moles) of 4-aminobutyric acid and 295.2 g (3.6 moles) of phosphorous acid under stirring and N₂ atmosphere during a 20 minutes time. The mixture of reaction was maintained to 85°C for two hours and, after cooling and addition of 400 ml of demineralized water, was kept under reflux for six hours.

The cooled solution was decolorized with charcoal, filtered and heated to about 80°C; a 40% NaOH solution was then slowly added while maintaining the temperature at about 80°C, until 2 ml of the solution, diluted to 80 ml with demineralized water reached pH 4.3 - 4.4.

The solution was cooled under stirring for 24 hours and then the product is filtered, washed with few cold water and air dried. The analysis confirmed the identity of the product, i.e. 4-amino-1-hydroxybutylidene-1,1-diphosphonic and its purity. 138.2 g of product were obtained corresponding to 0.43 moles and to a molar yield equal to 70.8%.

## Claims

1. A process for the preparation of aminodiphosphonic acids according to the formula 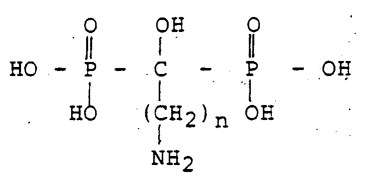 wherein n is comprised between 2 and 8, comprising the steps of:
- melting a mixture of the corresponding aminocarboxylic acid and phosphorous acid in the absence of a solvent;
- adding dropwise phosphorus trihalide;
- adding to the reaction mixture an hydrolyzing agent selected between water and a strong, non-oxidizing acid;
- recovering the diphosphonic acid thus produced;
said process being characterized in that the molar ratio between aminocarboxylic acid, phosphorous acid and phosphorus trihalide in the reaction mixture is comprised between 1:3:2 and 1:20:6.

2. A process according to claim 1, wherein said aminodiphosphonic acid is recovered by means of slow crystallization of the hydrolized reaction mixture.

3. A process according to claim 1, wherein said aminodiphosphonic acid is recovered by adding to the reaction mixture a water-soluble solvent selected between C₁-C₃ alcohols and acetone.

4. A process according to the previous claims, wherein after addition of an hydrolyzing agent, an alkaline hydroxyde is added so as to directly obtain the alkaline salt of the aminodiphosphonic acid in the mono- or di-substituted form.

5. A process according to the previous claims, wherein the corresponding aminocarboxylic acid is selected from 4-aminovaleric acid and 6-amino-caproic acid.

6. A process according to the previous claims, wherein the phosphorus trihalide is phosphorus trichloride.

7. A process according to the claim 1, wherein the aminodiphosphonic acid produced is 4-amino-1-hydroxybutylidene-1,1-diphosphonic acid.

8. A process according to claim 1, wherein the acid aminodiphosphonic produced is 6-amino-1-hydroxyhexylidene-1,1-diphosphonic acid.

9. A process according to claim 1, wherein the molar ratio between aminocarboxylic acid, phosphorous acid and phosphorus trihalide is in particular comprised between 1:5:2 and 1:10:4.

## Patentansprüche

1. Verfahren zur Herstellung von Aminodiphosphonsäuren gemäß der Formel 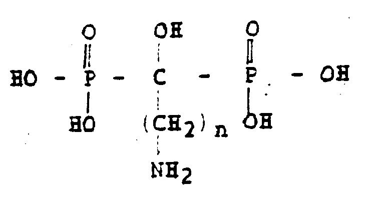 worin n 2 bis 8 beträgt, umfassend die Schritte:
- Schmelzen eines Gemisches aus der entsprechenden Aminocarbonsäure und phosphoriger Säure in Abwesenheit eines Lösungsmittels;
- tropfenweises Zugeben von Phosphortrihalogenid;
- Zugeben eines hydrolysierenden Mittels, welches aus Wasser und einer starken, nichtoxidierenden Säure ausgewählt ist, zu dem Reaktionsgemisch;
- Gewinnen der so hergestellten Diphosphonsäure;
**dadurch gekennzeichnet**, daß das Molverhältnis zwischen Aminocarbonsäure, phosphoriger Säure und Phosphortrihalogenid in dem Reaktionsgemisch zwischen 1:3:2 und 1:20:6 liegt.

2. Verfahren nach Anspruch 1, worin die Aminodiphosphonsäure durch langsame Kristallisation des hydrolysierten Reaktionsgemisches gewonnen wird.

3. Verfahren nach Anspruch 1, worin die Aminodiphosphonsäure durch Zugabe eines wasserlöslichen Lösungsmittels, ausgewählt aus C₁-C₃-Alkoholen und Aceton, zu dem Reaktionsgemisch gewonnen wird.

4. Verfahren nach den vorhergehenden Ansprüchen, worin nach der Zugabe eines hydrolysierenden Mittels ein alkalisches Hydroxid zugegeben wird, um direkt das alkalische Salz der Aminodiphosphonsäure in der mono- oder disubstituierten Form zu erhalten.

5. Verfahren nach den vorhergehenden Ansprüchen, worin die entsprechende Aminocarbonsäure ausgewählt wird aus 4-Aminovaleriansäure und 6-Amino-capronsäure.

6. Verfahren nach den vorhergehenden Ansprüchen, worin das Phosphortrihalogenid Phosphortrichlorid ist.

7. Verfahren nach Anspruch 1, worin die hergestellte Aminodiphosphonsäure 4-Amino-1-hydroxybutyliden-1,1-diphosphonsäure ist.

8. Verfahren nach Anspruch 1, worin die hergestellte Aminodiphosphonsäure 6-Amino-1-hydroxyhexyliden-1,1-diphosphonsäure ist.

9. Verfahren nach Anspruch 1, worin das Molverhältnis zwischen Aminocarbonsäure, phosphoriger Säure und Phosphortrihalogenid insbesondere zwischen 1:5:2 und 1:10:4 liegt.

## Revendications

1. Procédé pour la préparation d'acides aminodiphosphoniques selon la formule : 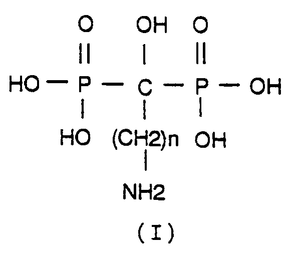 dans lequel n est compris entre 2 et 8, comprenant les étapes de :
- Fusion d'un mélange de l'acide aminocarboxylique correspondant et de l'acide phosphoreux en l'absence d'un solvant,
- Addition goutte à goutte d'un trihalogénure phosphoreux ;
- Addition d'un agent hydrolysant au mélange réactionnel ;
- Récupération de l'acide diphosphonique ainsi produit,
le dit procédé étant caractérisé en ce que le taux molaire entre l'acide aminocarboxylique, l'acide phosphoreux et le trihalogénure phosphoreux dans le mélange en réaction est compris entre 1:3:2 et 1:20:6 ;

2. Procédé selon la revendication 1, dans lequel le dit acide aminodiphosphonique est récupéré par cristallisation lente du mélange réactionnel hydrolisé ;

3. Procédé selon la revendication 1, dans lequel le dit acide aminodiphosphonique est récupéré en ajoutant au mélange réactionnel un solvant soluble dans l'eau, choisi parmi les alcools en C₁-C₃ et l'acétone ;

4. Procédé selon les revendications précédentes, dans lequel après l'addition d'un agent hydrolisant, on ajoute un hydrate alcalin de façon à obtenir directement le sel alcalin de l'acide aminodiphosphonique sous la forme mono- ou disubstituée ;

5. Procédé selon les revendications précédentes, dans lequel l'acide aminocarboxylique correspondant est choisi parmi les acides 4-aminovalérique et 6-amino- caproïque ;

6. Procédé selon les revendications précédentes, dans lequel le trihalogénure phosphoreux est le trichlorure de phosphore;

7. Procédé selon la revendication 1, dans lequel l'acide amino-diphosphonique produit est l'acide 4-amino-1-hydroxybutylidène 1, 1-diphosphonique ;

8. Procédé selon la revendication 1, dans lequel l'acide aminodiphosphonique produit est l'acide 6-amino-1-hydroxyhexylidène-1, 1-diphosphonique ;

9. Procédé selon la revendication 1, dans lequel le taux molaire entre l'acide aminocarboxylique, l'acide phosphoreux et le trihalogénure de phosphore est en particulier compris entre 1:5:2 et 1:10:4.
